# EUROPÄISCHE PATENTSCHRIFT

(11) **EP 1 448 730 B1**
(45) Veröffentlichungstag und Bekanntmachung des Hinweises auf die Patenterteilung: **31.03.2010**
(21) Anmeldenummer: 02785407.4
(22) Anmeldetag: 22.11.2002
(51) Int. Cl.: C09D 17/00, C09B 67/00, G01N 21/17

(54) **VERFAHREN ZUR HERSTELLUNG VON FARBPASTEN**
METHOD FOR THE PRODUCTION OF DYESTUFF PASTES
PROCEDE DE PRODUCTION DE PATES D'IMPRESSION

(30) Priorität: 23.11.2001 DE 10157435
(43) Veröffentlichungstag der Anmeldung: 25.08.2004
(73) Patentinhaber: BASF Coatings AG, 48165 Münster (DE)
(72) Erfinder: SIERAKOWSKI, Claudia, 64342 Seeheim-Jugenheim (DE); MANGELS, Ines, 48165 Münster (DE); CZORNIJ, Zenon-Paul, 48116-9419 Brighton, Michigan (US); KRÜGER, Thomas, 97249 Eisingen (DE); HOFFMANN, Peter, 48308 Senden (DE); FREY, Thomas, 68199 Mannheim (DE); SENS, Benno, 67434 Neustadt/Weinstrasse (DE); MIELKE, Manfred, 69118 Heidelberg (DE); GÜNTHERT, Paul, 67105 Schifferstadt (DE); BERGER, Gerhard, 70469 Stuttgart (DE); BLASCHKA, Peter, 67069 Ludwigshafen (DE); ETZRODT, Günter, 70180 Stuttgart (DE)
(74) Vertreter: Reitstötter - Kinzebach
(86) Internationale Anmeldenummer: PCT/EP2002/013139
(87) Internationale Veröffentlichungsnummer: WO 2003/044109

(56) Entgegenhaltungen:
- WO-A-02/74866
- DE-A- 19 652 791
- US-A- 5 022 758
- US-A- 5 369 483

## Beschreibung

Die vorliegende Erfindung betrifft ein Verfahren zur Herstellung von Farbpasten, wobei man eine Farbmittelteilchen enthaltende Komponente in einem Bindemittel dispergiert.

Farbpasten, auch Tönkonzentrate genannt, sind ein wesentlicher Herstellungsbestandteil für Lacke und Anstrichstoffe. Um beispielsweise bei Lacken viele unterschiedliche Farbtöne effizient herstellen zu können, werden Farbpasten verschiedenster Pigmente bevorratet und später zusammen mit sogenannten Auflackkomponenten zum gewünschten Farbton des Lacks vermischt. Die Farbpasten selbst werden durch Eindispergieren von Pulverpigmenten in ein an den jeweiligen Herstellungszweck angepasstes Bindemittel hergestellt.

Die Farbmittelteilchen, wie beispielsweise Pulverpigmente, werden im großtechnischen Maßstab in einem Mehrstufenprozess in Batchfahrweise gefertigt. Nach der Synthese fallen die Pigmente meist in relativ grobkristalliner Form als sog. Roh- oder Grobware an. Die Rohware wird üblicherweise zunächst getrocknet. Durch eine sog. Aktivierungsmahlung werden die groben Rohpigmente zerkleinert. Es entstehen kleinere, farbstärkere Partikel. Aufgrund der durch die Mahlung entstehenden breiten Korngrößenverteilung und der starken Neigung der zerkleinerten Partikel zur Agglomeration schließt sich an die Aktivierungsmahlung üblicherweise eine Behandlung in organischen Lösemitteln oder Wasser an, bei der die feinteilige Rohware, wie sie nach der Mahlung der gröberen Pigmente vorliegt, unter bestimmten Prozessbedingungen allmählich auf die Größe einer gewünschten Typware mit engerer Größenverteilung anwächst. Diese Nachbehandlung wird als Formierung oder Finish bezeichnet. Nach der Formierung werden die Pigmente typischerweise in Form eines, bevorzugt getrockneten, Presskuchens weiterverarbeitet. Üblicherweise wird bei der industriellen Pigmentherstellung mit konstanten Formierungszeiten gearbeitet. Aufgrund von Schwankungen in den Einsatzstoffen und den Prozessbedingungen sind aber die koloristischen Eigenschaften der formierten Pigmente gewissen Schwankungen ausgesetzt. Meist wird nach Beendigung des Formierungsprozesses beispielsweise der gewünschte, für die Typware charakteristische Bunttonwinkel oder die gewünschte Farbstärke nicht erreicht. Man versucht dann, die gewünschten koloristischen Eigenschaften durch Verschnitt mit einer anderen Produktionspartie zu erzielen. Beispielsweise kann eine Produktionspartie mit einer Farbstärke von 90% mit einer anderen Produktionspartie mit einer Farbstärke von 110 % vermischt werden, um eine Charge mit 100 % Farbstärke zu erzielen. Typnahe Ware eines Pigments ist daher überlicherweise ein Gemisch von Pigmenten aus verschiedenen Poduktionspartien. Ein Verfahren zur Herstellung von Pigmentdispersionen wird in der nach Art 54(3) u. (4) EPÜ zum Stand der Technik gehörenden WO-A-02074866 beschrieben.

Die hinsichtlich der koloristischen Eigenschaften korrekt gemischte Pigmentcharge wird anschließend in einem Bindemittel zur Herstellung der Farbpaste dispergiert. Als Dispergieraggregate werden bei der Lackherstellung meist Rührwerkskugelmühlen eingesetzt. Darin werden die Agglomerate aus Pigmentteilchen durch mechanische Wechselwirkungen mit den motorisch gerührten Mahlkugeln zerteilt und die Pigmente selbst zerkleinert, benetzt und homogenisiert. Üblicherweise wird der Dispergierprozess nach einer vorgegebenen Zeitdauer bzw. nach Erreichen eines bestimmten Energieeintrags abgebrochen und die Qualität des Endproduktes überprüft.

Da das menschliche Auge auch kleinste Farbunterschiede bei Anstrichen, Lacken oder Druckfarben wahrnehmen kann, ist die Qualitätskontrolle bei der industriellen Herstellung derartiger Farbpasten von besonderer Bedeutung, um eine möglichst gute Reproduktion einer bestimmten Farbserie zu erreichen und eine gleichbleibende Qualität der Produkte zu garantieren. Üblicherweise werden dazu Proben der Farbpaste gezogen und mittels an sich bekannter farbmetrischer Verfahren analysiert. Zur Bestimmung der Farbstärke wird beispielsweise ein Teil der Farbpaste mit einem Teil einer weißen Paste (Prüfweiß) vermischt und in einem herkömmlichen Farbmetrikgerät vermessen. Derartige Verfahren sind nicht nur aufwendig, sondern auch durch vielfältige Messfehler, wie Einwiegefehler, Fehler beim Vermischen der Komponenten usw. verbunden. In der deutschen Patentanmeldung DE 196 52 791 wird ein verbessertes Messverfahren beschrieben, das eine direkte Bestimmung der Farbstärke einer Farbpaste ermöglicht und daher die oben erwähnten Einwiegefehler vermeidet. Dazu wird Anregungslicht im infraroten Spektralbereich in eine Probe eingestrahlt und das aus der Probe zurückgestreute Licht spektral analysiert und mit der Farbstärke korreliert. Gemäss DE 196 52 791 ist die Einstrahlung von Licht im nahen infraroten Wellenlängenbereich bevorzugt, weil in diesem Bereich die sichtbare Farbe der Farbpaste keine Rolle spielt und die Streuintensität im wesentlichen ein Maß für die Verteilung der Partikelgröße darstellt.

Bei dem bekannten Verfahren wird aber stets die fertige Farbpaste im Sinne einer Qualitätskontrolle überprüft. Um Fehlchargen zu vermeiden, müssen daher die koloristischen Eigenschaften der eingesetzten Pigmentcharge innerhalb sehr enger Toleranzen liegen, wenn nach einer empirisch ermittelten, vorgegebenen Dispergierzeit eine Farbpaste mit den gewünschten Eigenschaften hergestellt werden soll. Die Anforderungen an den Pigmenthersteller sind daher hoch, was sich in einem entsprechend aufwendigen und teuren Herstellungsverfahren niederschlägt.

Aufgabe der vorliegenden Erfindung ist es nun, ein Verfahren zur Herstellung von Farbpasten durch Dispergieren einer Farbmittelteilchen enthaltenden Komponente in einem Bindemittel bereitzustellen, bei dem die koloristischen Eigenschaften der die Farbmittelteilchen enthaltenden Komponente eine größere Schwankungsbreite aufweisen kann, ohne dass die Eigenschaften der resultierenden Farbpaste verschlechtert werden.

Gelöst wird diese Aufgabe durch das Verfahren gemäss vorliegendem Anspruch 1.

Erfindungsgemäss wird das Eindispergieren der Farbmittelteilchen in das Bindemittel messtechnisch überwacht, und insbesondere die koloristischen Eigenschaften der Farbpaste während des Dispergierprozesses kontinuierlich oder in regelmäßigen Abständen bestimmt. Gegenstand der Erfindung ist demnach ein Verfahren zur Herstellung von Farbpasten, bei dem man eine Farbmittelteilchen enthaltende Komponente, beispielsweise Pigmentteilchen, in einem Bindemittel dispergiert, wobei das Verfahren dadurch gekennzeichnet ist, dass man den Dispergierprozess steuert, indem man Anregungslicht eines bestimmten Wellenlängenbereichs in ein Gemisch aus der die Farbmittelteilchen enthaltenden Komponente und dem Bindemittel einstrahlt und das von dem Gemisch transmittierte, reflektierte und/oder gestreute Licht detektiert. Das detektierte Licht wird zur Bestimmung eines Probenspektrums spektral zerlegt. Das Probenspektrum kann dann beispielsweise ein Transmissions- oder Absorptionsspektrum oder ein Remissionsspektrum sein. Auch mittels abgeschwächter Totalreflexion können Probenspektren gewonnen werden. Es ist möglich, mehrere spektrale Detektionsmethoden durch Einsatz verschiedener Sonden gleichzeitig einzusetzen, beispielsweise die abgeschwächte Totalrefelxion zusammen mit der Remission. Aus jedem einzelnen Probenspektrum kann man charakteristische Kennzahlen und insbesondere mit an sich bekannten farbmetrischen Methoden die koloristischen Eigenschaften der Farbpaste bestimmen. Erfindungsgemäss werden Veränderungen des Probenspektrums bzw. der Probenspektren und/oder der daraus ermittelten Kennzahlen der Farbpaste zeitlich überwacht. Der Dispergierprozess wird schließlich bei Erreichen eines vorgegebenen Spektrums bzw. vorgegebener Soll-Kennzahlen abgebrochen.

Im Gegensatz zum herkömmlichen Herstellungsprozess für Farbpasten können die koloristischen Eigenschaften der eingesetzten Farbmittelteilchen eine größere Schwankungsbreite aufweisen, da nicht mit einer vorgegebenen Dispergierdauer gearbeitet wird. Vielmehr wird die Dispergierdauer an das zu erreichende Ergebnis angepasst. Dabei macht sich die Erfindung zu Nutze, dass mit zunehmender Dispergierdauer eine Zerkleinerung der von den Farbmittelteilchen gebildeten Agglomerate bzw., bei größeren Partikeln, der Farbmittelteilchen selbst verbunden ist und die Teilchengröße wiederum das Probenspektrum und die daraus resultierenden Kennzahlen beeinflusst. So ist eine Veränderung der Teilchengröße bzw. der Teilchengrößenverteilung bei Pigmenten und Farbstoffteilchen mit einer Änderung der Farbeigenschaften selbst verbunden, die sich beispielsweise in einer Änderung der Normfarbwerte X, Y, Z (Definition nach DIN 5033, Blatt 3) manifestieren kann. Neben der Dispergierdauer können je nach gewählter Dispergiermethode auch andere Parameter, die sich auf die Teilchengröße auswirken, variiert werden. Beispielsweise kann bei Verwendung einer Kugelmühle die Geschwindigkeit des Rotors verändert werden.

Derartige farbmetrische Kennzahlen können sich beispielsweise an das CIELAB-Farbsystem anlehnen und eine oder mehrere der folgenden Größen umfassen: Bunttonwinkel (Hue), Farbsättigung (Chroma), Helligkeit (Lightness), Farbabstand (ΔE). Es existieren kommerziell erhältliche Programme (beispielsweise das Farbmetrikprogramm der "Aspect"-Meßsoftware der Firma Carl Zeiss, Oberkochen), mit deren Hilfe beispielsweise gemessene Remissionswerte direkt in CIELAB-Farbkoordinaten umgerechnet werden können. Damit kann beispielsweise der Farbort der Paste während des Dispergierprozesses zeitlich verfolgt werden.

Andere geeignete Kennzahlen können beispielsweise der Wert des Probenspektrums bei einer bestimmten Wellenlänge oder eine Kombination mehrerer Werte bei verschiedenen Wellenlängen sein.

Wird das Probenspektrum direkt ausgewertet, so wird häufig kein direkter Zusammenhang zwischen den gewünschten Produkteigenschaften und den gemessenen Spektren bekannt sein. In diesem Fall kann man den Zusammenhang zwischen Probenspektrum und koloristischer Produkteigenschaften auch mittels Korrelationsverfahren bestimmen. Dies kann beispielsweise mit chemometrischen Methoden geschehen, d.h. statistischen Korrelationsverfahren, bei denen eine zunächst hochdimensionale Datenmenge mittels linearer oder nichtlinearer Hauptkomponentenanalyse auf eine geringere Dimensionszahl reduziert wird. Auf diese. Daten können dann statistische Auswertungen wie Regressions- oder Clusteranalysen angewandt werden. Mit Hilfe künstlicher neuronaler Netze kann auch eine adaptive Anpassung eine Algorithmus erfolgen, der die Produkteigenschaften mit den gemessenen Remissionsspektren korreliert.

Entsprechende Auswerteverfahren sind bekannt. So kann neben der oben erwähnten DE 196 52 791 auf die DE 196 26 785 A1 verwiesen werden, in welcher ein Verfahren zur kontinuierlichen Farbmessung von Kunststoff-Formmassen beschrieben wird, bei dem ein Streulichtsensor im Kopf eines Extruders angeordnet ist. Durch Auswertung von Remissionsspektren, die mit einem Standard verglichen werden, können Farbstoffkonzentrationen in einer Polymerschmelze ermittelt werden. Ein Verfahren zur Bestimmung von Farbstoffkonzentrationen in Polymerschmelzen wird auch in dem US-Patent 5,369,483 beschrieben, das ebenfalls auf der Auswertung von Streulichtmessungen beruht. In US 5,369,483 wird außerdem erwähnt, dass aus den gewonnenen Streulichtspektren Farbraumkoordinaten abgeleitet werden können.

Das erfindungsgemäße Verfahren ermöglicht somit eine preisgünstiger Herstellung von Farbpasten, da die eingesetzten Farbmittelteilchen weniger strengen Qualitätsanforderungen genügen müssen.

Überraschend wurde außerdem festgestellt, dass das erfindungsgemäße Verfahren nicht nur eine größere Schwankungsbreite der koloristischen Eigenschaften der eingesetzten Farbmittelteilchen zulässt, sondern dass anstelle des üblicherweise verwendeten Gemischs von Farbmittelteilchen aus unterschiedlichen Produktionspartien bereits eine Vorstufe aus der Farbmittelteilchenherstellung in das Bindemittel eindispergiert werden kann. Dabei handelt es sich im allgemeinen um größere Teilchen oder Agglomerate, die durch Wahl einer geeigneten Dispergierdauer oder eines geeigneten Energieeintrags auf die für die gewünschten farbmetrischen Kennzahlen der Farbpaste erforderliche Größe zerkleinert werden. Mit dem erfindungsgemäßen Verfahren kann also der Gesamtherstellungsprozess auf Seiten der Pigmenthersteller verkürzt werden, was die Gesamtkosten der Farbpastenherstellung weiter verringert.

Als "Vorstufe" versteht man im vorliegenden Zusammenhang jedes teilchenförmige Zwischenprodukt, das zwischen der Synthese des Farbmittels und dem Mischen unterschiedlicher Produktionspartien der formierten Farbmittelteilchen anfällt. Gemäss einer ersten Variante des erfindungsgemäßen Verfahrens umfasst die Vorstufe Agglomerate feinteiliger Farbmittelteilchen. Dabei kann es sich beispielsweise um Agglomerate aus formierten Pigmenten handeln. Der mittlere Teilchendurchmesser der Agglomerate beträgt vor dem Dispergieren mehr als 1 µm, vorzugsweise mehr als 10 µm. Der mittlere Teilchendurchmesser ergibt sich als mittlerer Durchmesser der Volumenverteilung (Definition gemäß DIN 53206, Blatt 1) beispielsweise mit der Methode der Lichtbeugung. Hierfür existieren kommerziell erhältliche Messgeräte (beispielsweise Fa. Sympatec, Clausthal-Zellerfeld). Mit dem erfindungsgemäßen Verfahren kann also auf die letzte Stufe der Pigmentherstellung, d.h. auf das Vermischen unterschiedlicher Produktionspartien zur präzisen Einstellung vorgegebener farbmetrischer Kennzahlen, verzichtet werden. Die Agglomerate können auch aus noch nicht formiertem feinteiligem Pigmentpulver bestehen, wie es nach der Aktivierungsmahlung des Roh- oder Grobpigments anfällt.

Es ist gemäss einer anderen Variante des erfindungsgemäßen Verfahrens sogar vorgesehen, Roh- oder Grobpigment mit einem mittleren Teilchendurchmesser von mehr als 1 µm, vorzugsweise mehr als 10 µm zum Eindispergieren in das Bindemittel zu verwenden. Das Rohpigment wird dann bei dem Dispergierprozess gleichzeitig zerkleinert, vorzugsweise auf einen mittleren Teilchendurchmesser von weniger als 500 nm. Mit dem erfindungsgemäßen Verfahren können demnach Pigmente, wie sie unmittelbar nach der Synthese anfallen zum Eindispergieren in das Bindemittel verwendet werden. Eine Mahlung und Formierung des Rohpigments durch den Pigmenthersteller ist nicht mehr erforderlich. Die Zerkleinerung der Pigmente im Dispergierprozess auf unter 500 nm lässt sich beispielsweise durch die Teilchengrößenmessung nach der Methode der Photonenkorrelationsspektroskopie nachweisen. Der mittlere Durchmesser ergibt sich hieraus als mittlerer Durchmesser der Volumenverteilung. Entsprechende Geräte sind unter anderem bei der Fa. Malvern, Herrenberg, erhältlich.

Bevorzugt bestimmt man das Probenspektrum in einem Wellenlängenbereich zwischen 175 und 3000 nm, besonders bevorzugt zwischen 200 und 1000 nm. Vorteilhaft strahlt man Anregungslicht ein, das eine möglichst gleichmäßige Intensitätsverteilung im gewählten Spektralbereich aufweist. Vorteilhaft wird man aber auch das Spektrum der Lichtquelle selbst aufzeichnen und das gemessene Probenspektrum entsprechend gewichten.

Im laufenden Dispergierprozess können regelmäßig Proben genommen und spektroskopisch untersucht werden, um die momentanen Eigenschaften der Farbpaste zu untersuchen. Unter herkömmlichen industriellen Dispergierbedingungen reicht eine Probennahme im Abstand von 5 bis 15 min meist aus, um den Dispergierprozess mit der erforderlichen Genauigkeit überwachen zu können.

Besonders bevorzugt wird das Gemisch aus der die Farbmittelteilchen enthaltenden Komponente und dem Bindemittel im laufenden Dispergierprozess aber in-line spektroskopisch untersucht. Dazu kann man faseroptische Sonden, beispielsweise Rückstreu-, Transmissions-, Remissions- oder ATR(attenuated total reflection)-Sonden verwenden, wie sie von Heffels et al. in Part. Part. Syst. Charact. 15 (1998) 211-218 beschrieben werden. Eine neuartige ATR-Sonde ist auch in dem deutschen Patent 198 56 591 C2 der Anmelderin beschrieben. Besonders vorteilhaft ist die Faseroptik in einer Tauchsonde angeordnet, die an ihrer Stirnseite ein optisch transparentes Meßfenster aufweist. Typischerweise ist die Tauchsonde als längliche Sonde ausgebildet, die beispielsweise über einen Flanschanschluss im Deckel eines Rührkessels befestigt werden kann und in das im Kessel befindliche Medium eintaucht. Für Dispergierprozesse wird die Sonde vorteilhaft in einer Förderleitung zwischen einer Umwälzpumpe und der Dispergiereinrichtung, beispielsweise einer Rührwerkskugelmühle, angeordnet.

Zur Untersuchung von Farbpasten sind insbesondere Remissionssonden und ATR-Sonden geeignet, da das Licht bei dieser Sensoranordnung nicht tief in die Umgebung eindringen muss. Die typische Eindringtiefe des eingestrahlten Lichtes liegt dann bei Remissionssonden im Bereich von wenigen Mikrometern und bei ATR-Sonden im Bereich von einigen wenigen Wellenlängen des eingestrahlten Lichts. Man wird die Stirnseite der Sonde vorteilhaft möglichst glatt und eben ausbilden, damit ein guter Austausch des Mediums in unmittelbaren Grenzschicht zum transparenten Fenster gewährleistet ist. Besonders vorteilhaft ist die Förderleitung im Bereich der Sonde eingeengt, um durch den auftretenden Düseneffekt Ablagerungen auf dem Sondenfenster zu verhindern, bzw. zu entfernen.

In dem erfindungsgemäßen Verfahren können unterschiedlichste teilchenförmige Farbmittel eingesetzt werden, wie beispielsweise Pthalocyanine (z.B. P.B. 15; P.G. 7; P.G. 36), Isoindoline (z.B. P.Y. 109, 110, 139; P.O. 69; P.R. 260), Perylene (z.B. P.R. 123, 149, 178, 179, 190, 224; P.V. 29), sowie anthrachinoide Spezies (etwa Indanthrone (z.B. P.B. 60), Flavanthrone (z.B. P.Y. 24), Wismutvanadat (z.B. P.Y. 184), Eisenoxide (z.B. P.R. 101), TiO₂-Mischoxide (z.B. P.Y. 53, P.BR.24), Bleichromate (z.B. P.Y. 34, P.R. 104) und Pyranthrone (z.B. P.O. 40, 51; P.R. 216, 226)).

Die Erfindung wird im folgenden unter Bezugnahme auf zwei Ausführungsbeispiele näher erläutert.

In den Beispielen wird der Dispergierprozess mit Hilfe einer Remissions-Inline-Sonde in Abständen von 10 Minuten durch Messen des Remissionsspektrums im Wellenlängenbereich von 200 nm bis 1000 nm verfolgt. Dazu taucht das Fenster an der Spitze der stabförmigen Remissionssonde in eine Pumpleitung zwischen einer Förderpumpe und einer zum Dispergieren verwendeten Kugelmühle ein. An dieser Stelle ist der Kanal eingeengt, um durch den dabei auftretenden Düseneffekt mögliche Ablagerungen auf dem Sondenfenster zu vermeiden.

### Beispiel 1: Herstellung einer Farbpaste unter Verwendung einer gefinishten Vorstufe

Aus dem Pigmentherstellungsprozess wird gefinishter Presskuchen (P.G. 15, mittlere Partikelgröße < 200 nm) entnommen.

In einem 1000 ml Vorratsgefäß werden 240 g einer 50%igem Bindemittellösung (Acrylat-modifizierte wässrige Polyurethandispersion) vorgelegt. Mit einer Dissolverscheibe wird die Bindemittellösung langsam gerührt. Dazu gibt man 250 g des 40%igen Presskuchens und homogenisiert mit Hilfe eines Dissolvers. Die Umdrehungsgeschwindigkeit wird auf 20 m/Sek. erhöht und das Mahlgut 20 Minuten dissolviert, damit sehr grobe Agglomerate vordispergiert werden.

Anschließend wird das Mahlgut in die Rührwerkskugelmühle gegeben und die Teilchen mit Hilfe von Mahlkörpern im Medium verteilt. Die Umfangsgeschwindigkeit des Mühlenrotors beträgt 6 - 16 m pro Sekunde. Das Ende der Dispergierung ist erreicht, wenn die durchschnittliche Größe der Agglomerate kleiner als 500 nm und ungefähr das Doppelte Farbstärkenniveau erreicht ist.

Der Dispergierprozess wird wie oben dargestellt verfolgt.

Abbruchbedingung für den Dispergierprozess ist, wenn die aus dem zuletzt gemessenen Remissionsspektrum ermittelte Absorption bei einer bestimmten Wellenlänge im Vergleich zu vorangegangenen Spektren konstant bleibt und der Farbtonwinkel einen vorgegebenen Wert erreicht hat.

### Beispiel 2: Herstellung einer Farbpaste unter Verwendung von nicht aktivierter Rohware

Aus dem Betrieb wird getrocknete Rohware Perylen (P.R. 179, mittlere Partikelgröße > 5 µm) entnommen.

In einem 1000 ml Vorratsgefäß werden 400 g einer 30%igen Bindemittellösung (Acrylat-modifizierte wässrige Polyurethandispersion) vorgelegt. Mit einer Dissolverscheibe wird die Bindemittellösung langsam gerührt. Dazu gibt man 100 g der getrockneten bis zu 5 µm groben Rohware, die Viskosität der Mischung steigt. Die Umdrehungsgeschwindigkeit wird auf 20 m/Sek. erhöht und das Mahlgut 20 Minuten dissolviert, damit sehr grobe Teilchen vordispergiert werden.

Anschließend wird das Mahlgut in eine Rührwerkskugelmühle gegeben und die Teilchen mit Hilfe von Mahlkörpern zerkleinert.

Der Dispergier- und Zerkeinerungsprozess wird wieder wie oben dargestellt verfolgt.

Das Ende des Dispergierprozesses ist erreicht, wenn die durchschnittliche Teilchengröße auf unter 500 nm gefallen ist und ungefähr das Farbstärkenniveau der auf herkömmlichem Weg hergestellten Paste erreicht wurde. Abbruchbedingung ist, wenn die aus dem zuletzt gemessenen Remissionsspektrum ermittelte Absorption bei 450 nm im Vergleich zu vorangegangenen Spektren konstant bleibt und der Farbtonwinkel einen Wert von unter 26° erreicht hat.

## Patentansprüche

1. Verfahren zur Herstellung von Farbpasten, wobei man eine Farbmittelteilchen enthaltende Komponente in einem Bindemittel dispergiert, wobei man
den Dispergierprozess steuert, indem man
Anregungslicht eines bestimmten Wellenlängenbereichs in ein Gemisch aus der Farbmittelteilchen enthaltenden Komponente und dem Bindemittel einstrahlt,
das von dem Gemisch transmittierte, reflektierte und/oder gestreute Licht detektiert und ein Probenspektrum bestimmt,
das Probenspektrum auswertet und damit Kennzahlen der Farbpaste bestimmt, und
Veränderungen des Probenspektrums zeitlich überwacht und den Dispergierprozess bei Erreichen vorgegebener Soll-Kennzahlen abbricht.

2. Verfahren gemäss Anspruch 1, wobei man als Farbmittelteilchen enthaltende Komponente eine Vorstufe aus einem Pigmentherstellungsverfahren in das Bindemittel eindispergiert und bei dem Dispergierprozess zerkleinert.

3. Verfahren gemäss Anspruch 2, wobei die Vorstufe Agglomerate feinteiliger Pigmente umfasst, wobei der mittlere Teilchendurchmesser der Agglomerate mehr als 1 µm beträgt.

4. Verfahren gemäss Anspruch 3, wobei die Agglomerate formierte Pigmente umfassen.

5. Verfahren gemäss Anspruch 3, wobei die Agglomerate nichtformierte gemahlenen Pigmente umfassen.

6. Verfahren gemäss Anspruch 2, wobei die Vorstufe Roh- oder Grobpigment mit einem mittleren Teilchendurchmesser von mehr als 1 µm umfasst.

7. Verfahren gemäss einem der Ansprüche 1 bis 6, wobei man das Probenspektrum in einem Wellenlängenbereich zwischen 175 und 3000 nm bestimmt.

8. Verfahren gemäss Anspruch 7, wobei man das Probenspektrum in einem Wellenlängenbereich zwischen 200 und 1000 nm bestimmt.

9. Verfahren gemäss einem der Ansprüche 6 oder 7, wobei man zur Bestimmung einer oder mehrerer Kennzahlen der Farbpaste chemometrische Methoden verwendet.

10. Verfahren gemäss einem der Ansprüche 1 bis 9, wobei das Gemisch aus der Farbmittelteilchen enthaltenden Komponente und dem Bindemittel durch regelmäßige Probennahme im laufenden Dispergierprozess gewinnt und die Proben spektroskopisch untersucht.

11. Verfahren gemäss einem der Ansprüche 1 bis 10, wobei das Gemisch aus der Farbmittelteilchen enthaltenden Komponente und dem Bindemittel im laufenden Dispergierprozess in-line spektroskopisch untersucht.

12. Verfahren gemäss Anspruch 11, wobei man eine oder mehrere faseroptischen Sonden zur spektroskopischen Untersuchung des Gemisches verwendet.

## Claims

1. Method of producing color pastes, where a component comprising colorant particles is dispersed in a binder, where
the dispersing operation is controlled by
beaming excitational light of a defined wavelength range into a mixture of the component comprising colorant particles and the binder,
detecting the light transmitted, reflected and/or scattered by the mixture, and determining a sample spectrum,
evaluating the sample spectrum and hence determining parameters of the color paste, and
monitoring changes in the sample spectrum over time and terminating the dispersing operation when predetermined target parameters are attained.

2. Method according to Claim 1, where as component comprising colorant particles a precursor for a pigment production process is dispersed into the binder and is reduced in size during the dispersing operation.

3. Method according to Claim 2, where the precursor comprises agglomerates of finely divided pigments, the average particle diameter of the agglomerates being more than 1 µm.

4. Method according to Claim 3, where the agglomerates comprise finished pigments.

5. Method according to Claim 3, where the agglomerates comprise nonfinished ground pigments.

6. Method according to Claim 2, where the precursor comprises crude pigment or coarse pigment having an average particle diameter of more than 1 µm.

7. Method according to one of Claims 1 to 6, where the sample spectrum is determined in a wavelength range between 175 and 3000 nm.

8. Method according to Claim 7, where the sample spectrum is determined in a wavelength range between 200 and 1000 nm.

9. Method according to either of Claims 6 and 7, where chemometric methods are used to determine one or more parameters of the color paste.

10. Method according to one of Claims 1 to 9, where the mixture of the component comprising colorant particles and the binder is obtained by regular sampling in the ongoing dispersing operation and the samples are subjected to spectroscopic analysis.

11. Method according to one of Claims 1 to 10, where the fixture of the component comprising colorant particles and the binder is subjected to inline spectroscopic analysis in the ongoing dispersing operation.

12. Method according to Claim 11, where one or more fiber-optic probes are used for the spectroscopic analysis of the mixture.

## Revendications

1. Procédé pour la préparation de pâtes teintées, où on disperse un composant contenant des particules de colorant dans un liant, en contrôlant le processus de dispersion en ce qu'on
- irradie de la lumière d'excitation d'une plage de longueurs d'onde déterminée dans un mélange du composant contenant les particules de colorant et le liant,
- détecte la lumière transmise, réfléchie et/ou diffusée par le mélange et on détermine un spectre de l'échantillon,
- évalue le spectre de l'échantillon et on détermine ainsi les grandeurs caractéristiques de la pâte de couleur, et
- surveille les modifications du spectre de l'échantillon dans le temps et on interrompt le processus de dispersion lorsque des grandeurs caractéristiques de consigne prédéfinies sont atteintes.

2. Procédé selon la revendication 1, où on disperse, comme composant contenant des particules de colorant, un précurseur provenant d'un procédé de préparation de pigments dans le liant et on le réduit lors du processus de dispersion.

3. Procédé selon la revendication 2, où le précurseur comprend des agglomérats de pigments finement divisés, où le diamètre moyen de particule des agglomérats est supérieur à 1 µm.

4. Procédé selon la revendication 3, où les agglomérats comprennent des pigments façonnés.

5. Procédé selon la revendication 3, où les agglomérats comprennent des pigments non façonnés broyés.

6. Procédé selon la revendication 2, où le précurseur comprend un pigment brut ou grossier présentant un diamètre moyen de particule supérieur à 1 µm.

7. Procédé selon l'une quelconque des revendications 1 à 6, où on détermine le spectre d'échantillon dans une plage de longueurs d'onde entre 175 et 3000 nm.

8. Procédé selon la revendication 7, où on détermine le spectre d'échantillon dans une plage de longueurs d'onde entre 200 et 1000 nm.

9. Procédé selon l'une quelconque des revendications 6 ou 7, où on utilise pour la détermination d'une ou de plusieurs grandeurs caractéristiques de la pâte teintée des procédés chimiométriques.

10. Procédé selon l'une quelconque des revendications 1 à 9, où le mélange de composant contenant des particules de colorant et de liant est obtenu par prélèvement régulier d'échantillons au cours du processus de dispersion et les échantillons sont analysés par spectroscopie.

11. Procédé selon l'une quelconque des revendications 1 à 10, où le mélange de composant contenant des particules de colorant et de liant est analysé au cours du processus de dispersion par spectroscopie en ligne.

12. Procédé selon la revendication 11, où on utilise une ou plusieurs sondes à fibre optique pour l'analyse spectroscopique du mélange.
